# EUROPEAN PATENT APPLICATION

(11) **EP 1 624 587 A2**
(43) Date of publication of application: **08.02.2006**
(21) Application number: 05254779.1
(22) Date of filing: 29.07.2005
(51) Int. Cl.: H04B 1/20

(54) **Electric apparatus, data recording and/or reproduction apparatus and starting controlling method**

(30) Priority: 06.08.2004 JP 2004230483
(71) Applicant: SONY CORPORATION, Tokyo (JP)
(72) Inventor: Hosogaya, Norifumi, c/o Sony Corporation, Tokyo (JP); Katsuki, Shinji, c/o Sony Corporation, Tokyo (JP)
(74) Representative: Mills, Julia

(57) **Abstract**

An apparatus for receiving a control signal in a wireless fashion is disclosed which achieves significant reduction of the standby power. The apparatus includes a wireless communication section for communicating, when the communication section is in an operation state, with a remote control apparatus to render the apparatus operative. When the wireless communication section is in a standby state, a wake control section receives an operation signal from the remote control apparatus and changes over the state of the wireless communication section from the standby state to the operation state.

## Description

This invention relates to the field of electric apparatus such as audio reproduction apparatus, and more particularly to electric apparatus such as audio reproduction apparatus which are remotely controlled by remote control apparatus.

Various portable audio reproduction apparatus have conventionally been developed which reproduce an audio signal from a CD (Compact Disk), an MD (Mini Disk) or the like on which the audio signal is recorded. An audio reproduction apparatus which is most simple in configuration is configured such that a headphone jack is provided on an apparatus body and a user can enjoy an audio signal using a headphone apparatus connected to the headphone jack. However, when the audio reproduction apparatus body and the headphone apparatus are connected to each other in this manner by a cable, the cable sometimes makes an obstacle in use of the audio reproduction apparatus. Therefore, an audio reproduction system has been developed wherein an audio reproduction apparatus transmits an audio signal as a radio signal to a headphone apparatus so that signal communication is performed in a wireless fashion between the audio reproduction apparatus and the headphone apparatus.

In this instance, starting of reproduction, stopping of reproduction, fast feeding, rewinding and so forth on the audio reproduction apparatus can be performed by an operation of keys attached to the audio reproduction apparatus body. Also another audio reproduction system is available wherein a headphone apparatus and a remote control apparatus are formed as a unitary apparatus such that an operation of an audio reproduction apparatus can be performed also by an operation of keys provided on the headphone apparatus. In the audio reproduction system, a control signal for controlling a reproduction action is transmitted as a radio signal from the headphone apparatus side to the audio reproduction apparatus side.

Where a reproduction action of the audio reproduction apparatus is controlled from the headphone apparatus side by such radio transmission as described above, it is unknown when a control signal is transmitted from the headphone apparatus of the transmission side to the audio reproduction apparatus of the reception side. Therefore, the audio reproduction apparatus which waits for reception of a control signal must keep an operative condition.

However, portable audio reproduction apparatus use a dry cell or a re-chargeable cell as a power supply. Therefore, while the operative condition continues, the power of the cell is consumed and the cell cannot be used for a long period of time. Therefore, with an apparatus on the reproduction side such as a portable audio reproduction apparatus, it is a significant problem how to suppress the power consumption in a standby state to a low level.

Such a technique as described below is available as a technique for achieving low power consumption on an apparatus on the reception side (receiver). In particular, prior to transmission of data from the transmitter, a leader pulse which continues for a predetermined period of time longer than a period of time for transmission duration of individual data is transmitted. Further, the receiver is intermittently placed into an operative state for a short period of time with a low duty so that the receiver may be placed into an operative state during transmission of the leader pulse. Then, while the receiver is operative, it detects whether or not a leader pulse transmitted thereto is received. If it is detected that a leader pulse is transmitted from the transmitter, then the receiver is placed into an operative state for the predetermined period of time. Consequently, the period of time of operation of the receiver which is in a standby state can be reduced to achieve low power consumption. The technique described is disclosed, for example, on pages 2 to 3 of Japanese Patent Publication No. Hei 7-75426 (hereinafter referred to as Patent Document 1).

Incidentally, also the system which reduces the period of time of operation of the apparatus on the reception side while it is in a standby state by intermittently placing the apparatus into an operative state for a short period of time with a low duty like the apparatus disclosed in Patent Document 1 mentioned above exhibits a fixed effect on the reduction of the power consumption.

However, since high power consumption is originally required to keep a wireless reception condition, even if the apparatus on the reception side is intermittently placed into an operative stage with a low duty, fixed standby power is consumed. Therefore, there is a limitation to suppression of the consumption of standby power, and it is insufficient for the apparatus on the reception side such as, for example, a portable audio apparatus to use the power stored in a cell efficiently in actual action thereof.

Embodiments of the present invention seek to provide an apparatus on the reception side for receiving a control signal in a wireless fashion which achieves significant reduction of the standby power.

Various respective aspects of the present invention are set out in the appended claims.

A first aspect of the present invention, provides an electronic apparatus for communicating with a remote control apparatus by radio communication, including an apparatus body, a communication section for communicating, when the communication section is in an operation state, with the remote control apparatus to render the apparatus body operative, and an activation control section for receiving, when the communication section is in a standby state, an operation signal from the remote control apparatus and changing over the state of the communication section from the standby state to the operation state.

A second aspect of the present invention, provides a data recording and/or reproduction apparatus which is controlled through radio communication from a remote control apparatus, including a data recording and/or reproduction section for recording and/or reproducing data on and/or from a recording medium, a communication section for communicating with the remote control apparatus, a control section for controlling the data recording and/or reproduction section and the communication section when the control section is in an operation state, and an activation signal generation section for receiving, when the activation signal generation section is in an operation state, an operation signal from the remote control apparatus and generating an activation signal for changing the state of the control section from the standby state to the operation state.

With the electric apparatus and the data recording and/or reproduction apparatus, the standby power in the apparatus on the reception side which receives a control signal transmitted by wireless transmission can be reduced significantly. Consequently, the power stored in a cell can be utilized efficiently for actual action of the apparatus.

The above and other objects, features and advantages of the present invention will become apparent from the following description and the appended claims, taken in conjunction with the accompanying drawings in which like parts or elements denoted by like reference symbols.

The present invention will be described further, by way of example only, with reference to preferred embodiments thereof as illustrated in the accompanying drawings, in which:
FIG. 1 is a block diagram showing a configuration of an audio reproduction apparatus to which an embodiment of the present invention is applied;
FIG. 2 is a block diagram showing a configuration of a remote control apparatus for use with the audio reproduction apparatus of FIG. 1;
FIG. 3 is a circuit diagram showing a configuration of a wake starting section of the audio reproduction apparatus of FIG. 1; and
FIG. 4 is a block diagram showing a configuration of an audio reproduction apparatus on which a single common antenna is disposed.

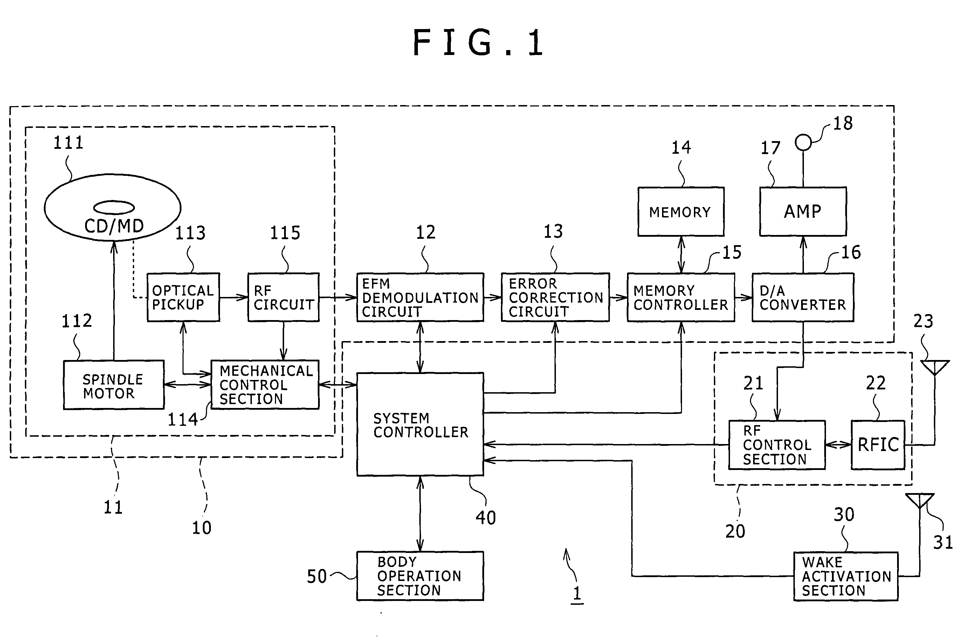

Referring first to FIG. 1, there is shown a configuration of an audio reproduction apparatus as an electric apparatus to which an embodiment of the present invention is applied. The audio reproduction apparatus 1 shown includes, as principal components thereof, an audio reproduction section 10 as an example of a data recording and/or reproduction section for reproducing an audio signal, and a wireless communication section 20 as an example of a communication section for communicating with a remote control apparatus not shown. The audio reproduction apparatus 1 further includes a wake activation section 30 as an example of a wake signal generation section for activating the audio reproduction apparatus 1, a system controller 40 as an example of a control section for controlling the components of the audio reproduction apparatus 1, and a body operation section 50 for accepting an instruction such as a reproduction starting, stopping, fast feeding or rewinding instruction from a user.

The audio reproduction section 10 includes a mechanical control 11, an EFM (Eight to Fourteen Modulation) demodulation circuit 12, an error correction circuit 13, a memory 14, a memory controller 15, a D/A (digital to analog) converter 16, and an amplifier (AMP) 17. The mechanical control 11 performs operation control and reading control of a recording medium such as a CD (Compact Disk) or an MD (Mini Disk). The EFM demodulation circuit 12 demodulates an audio signal read from the recording medium. The error correction circuit 13 performs error correction and error modification of the demodulated audio signal. The memory 14 stores data of the audio signal. The memory controller 15 controls inputting and outputting of the audio signal data to and from the memory 14. The D/A converter 16 converts a digital signal into an analog signal. The amplifier 17 amplifies and supplies the audio signal to a headphone jack 18.

If a recording medium (disk) 111 such as a CD or an MD is loaded into the audio reproduction section 10, then the mechanical control 11 of the audio reproduction section 10 controls a spindle motor 112 to rotate the disk 111. Thereupon, the rotation of the spindle motor 112 is controlled by a mechanical control section 114 so that the linear velocity of the disk 111 may be a predetermined speed. An optical pickup 113 for reading an audio signal recorded on the disk 111 is disposed in an opposing relationship to one face of the disk 111. The optical pickup 113 outputs the audio signal read from the disk 111 to an RF (Radio Frequency) circuit 115, by which a focusing error signal is detected from the audio signal, for example, using an astigmatism method and a tracking error is detected, for example, using a push-pull method. Then, the error signals are outputted to the mechanical control section 114, by which the optical pickup 113 is controlled so that a focusing error and a tracking error may not appear.

Further, the audio signal from the optical pickup 113 of the mechanical control 11 is supplied to the EFM demodulation circuit 12 through the RF circuit 115. The EFM demodulation circuit 12 demodulates and outputs the read audio signal to the error correction circuit 13. The error correction circuit 13 executes error correction and error modification for the demodulated audio signal. Then, the audio signal outputted from the error correction circuit 13 is supplied to the D/A converter 16 through the memory controller 15 and the memory 14 for the shock proof hereinafter described. Then, the audio signal is D/A converted back into an original stereo audio signal by the D/A converter 16. The D/A converted audio signal is outputted to the headphone jack 18 through the amplifier 17. Thereupon, the mechanical control section 114, EFM demodulation circuit 12, error correction circuit 13 and memory. controller 15 are controlled by the system controller 40.

Here, the memory controller 15 and the memory 14 of the audio reproduction section 10 are described. The memory controller 15 and the memory 14 are provided so that, also when the optical pickup 113 fails to reproduce a signal from the disk 111 because of vibrations when the audio reproduction apparatus 1 is used, for example, during walking of the user, no sound break occurs with reproduction sound.

The spindle motor 112 rotates the disk 111 at a speed equal to, for example, twice the original speed at which reproduction is to be performed on the real time basis. Consequently, the audio signal is outputted at a rate equal to twice the original data rate (bit rate) from the error correction circuit 13. On the other hand, since the moving speed of the optical pickup 113 keeps the original speed, in ordinary action, the same audio signal is repetitively obtained twice from the error correction circuit 13 in response to rotation of the disk 111. Therefore, only it is necessary to effectively use the audio signal obtained by reading once from between the audio signals obtained by reading twice.

Thus, the audio signal data outputted from the error correction circuit 13 are supplied to the memory 14 under the control of the memory controller 15 whereas writing of the audio signal data is performed intermittently so that the same audio signal data may not written in an overlapping relationship. Then, the audio signal data written in the memory 14 are read out continuously under the control of the memory controller 15 and supplied to the D/A converter 16.

By the configuration described above, even if the optical pickup 113 fails to reproduce an audio signal from the disk 111 because of vibrations and consequently audio signal data cannot be written into the memory 14, since audio signal data before then are cumulatively stored in the memory 14, the audio signal data can be read out continuously.

Then, since reproduction of an audio signal from the disk 111 can be re-executed a few times within a period within which the accumulated audio signal data are read out, the audio signal data to be written into the memory 14 can be made complete as a result of the re-execution of reproduction. Consequently, inadvertent break of reproduction sound can be prevented or at least reduced.

Further, at this time, since the same audio signal data are outputted twice by twice from the error correction circuit 13, a certain amount of audio signal data can be stored always in the memory 14. Therefore, whenever reproduction of a signal from the disk 111 results in failure, the audio reproduction apparatus 1 can cope with the failure.

The wireless communication section 20 includes an RF (Radio Frequency) control section 21 for controlling communication when it communicates with the remote control apparatus (not shown) by radio communication, and an RFIC (RF Integrate Circuit) 22 for transmitting and receiving a radio wave of, for example, a frequency of 2.4 GHz to and from the remote control apparatus through an antenna 23. Then, the wireless communication section 20 transmits an audio signal after D/A converted into a stereo audio signal by the D/A converter 16 of the audio reproduction section 10 to the remote control apparatus under the control of the system controller 40. Further, the wireless communication section 20 receives an instruction signal such as a reproduction starting, stopping, fast feeding or rewinding instruction from the remote control apparatus and transmits the instruction signal to the system controller 40.

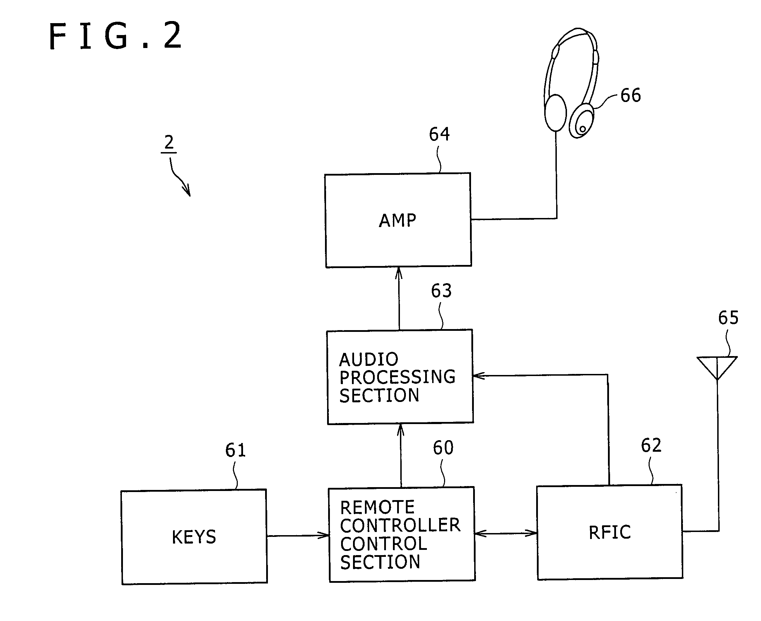

Now, the remote control apparatus is described. FIG. 2 shows a configuration of the remote control apparatus 2. Referring to FIG. 2, the remote control apparatus 2 shown includes a remote controller control section 60, keys 61, an RFIC 62, an audio processing section 63, an amplifier (AMP) 64, and a headphone 66. The remote controller control section 60 controls the components in the remote control apparatus 2. The keys 61 are provided to issue operation instructions such as activation, reproduction starting, stopping, fast feeding, rewiring and sound volume adjusting instructions for the audio reproduction apparatus 1. The RFIC 62 transmits and receives a radio wave of, for example, a frequency of 2.4 GHz to and from the audio reproduction apparatus 1 through an antenna 65. The audio processing section 63 processes audio signal received from the audio reproduction apparatus 1 for reproduction. The amplifier 64 amplifies the audio signal processed by the audio processing section 63. The headphone 66 outputs the audio signal amplified by the amplifier 64 as sound.

In the remote control apparatus 2, if an instruction signal such as a reproduction starting instruction signal is inputted by an operation of one of the keys 61 by the user, then the remote controller control section 60 transmits the instruction signal to the audio reproduction apparatus 1 from the RFIC 62 through the antenna 65.

On the other hand, an audio signal transmitted from the wireless communication section 20 of the audio reproduction apparatus 1 is received by the RFIC 62 through the antenna 65. The audio signal received by the RFIC 62 is sent to the audio processing section 63 under the control of the remote controller control section 60. Then, the audio signal is processed for reproduction by the audio processing section 63 and amplified by the amplifier 64, whereafter it is outputted to the headphone 66.

In the audio reproduction apparatus of the present embodiment, if an instruction signal such as an activation instruction signal or a reproduction starting instruction signal for the audio reproduction apparatus 1 is inputted from the keys 61 of the remote control apparatus 2 and transmitted to the audio reproduction apparatus 1 from the RFIC 62 of the remote control apparatus 2 through the antenna 65, then the instruction signal is detected by the wake activation section 30 of the audio reproduction apparatus 1. Then, the wake activation section 30 having detected the instruction signal from the remote control apparatus 2 outputs a wake signal to the system controller 40 of the audio reproduction apparatus 1, and if the audio reproduction apparatus 1 is in a state set in a "standby mode", then the mode setting can be changed from the "standby mode" to an "operation mode".

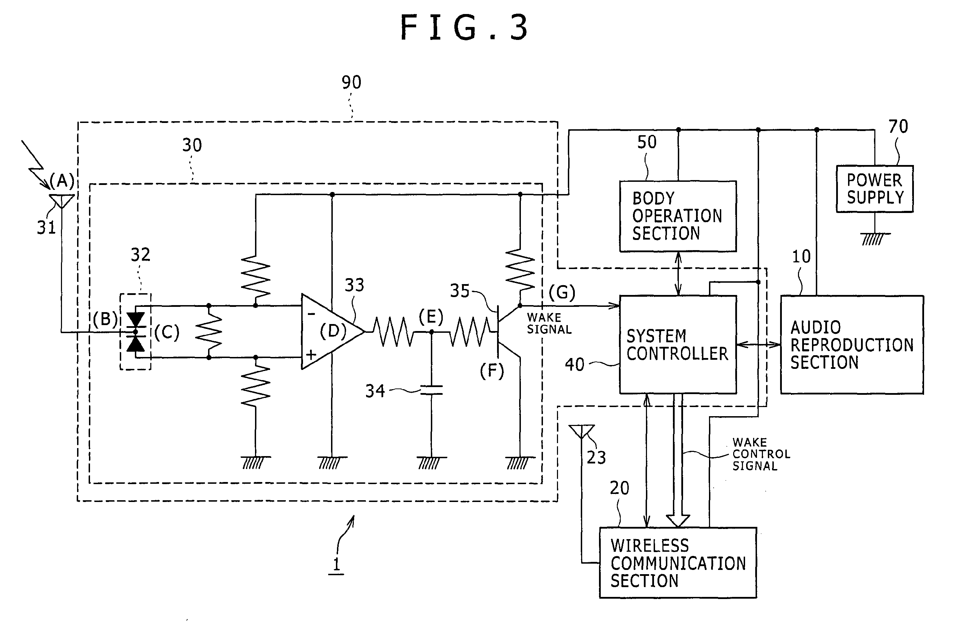

FIG. 3 shows a configuration of the wake activation section 30. Referring to FIG. 3, the wake activation section 30 includes an operational amplifier 33 and a transistor 35 as basic components thereof. The wake activation section 30 performs signal processing in the order of (A) to (G) illustrated in FIG. 3 to generate a wake signal. A flow of the signal processing by the wake activation section 30 is described below.
(A) First, an antenna 31 receives a radio wave from the remote control apparatus 2 which serves as a trigger.
(B) The antenna 31 resonates with the radio wave to generate a resonance signal.
(C) The resonance signal passes through a diode 32, whereupon the phase is displaced, and superposed signals of the mutually displaced phases are inputted to the operational amplifier 33.
(D) A difference between the signals inputted to the operational amplifier 33 is amplified by a gain (substantially infinite) of the operational amplifier 33, and consequently, it is outputted as a rectangular wave.
(E) The rectangular signal outputted from the operational amplifier 33 passes through a low-pass filter 34, whereupon a DC component is extracted from the rectangular signal.
(F) The DC component of the radio wave signal is inputted to the base of the transistor 35. Then, the transistor 35 is turned on when the DC component of the rectangular signal becomes higher than the base-emitter voltage (V_{BE}) of the transistor 35.
(G) Then, the transistor 35 outputs a wake signal (high level "H" → low level "L") to the system controller 40.

In the audio reproduction apparatus 1 of the present embodiment, the mode setting of the system controller 40 can be changed from the "standby mode" to the "operation mode" by the wake activation section 30 having such a configuration as described above.

Usually, in the audio reproduction apparatus 1, when the state wherein the audio reproduction apparatus 1 is inoperative continues for a predetermined period of time (for example, 10 seconds), the "standby mode" is set. Then, in the standby mode, no power is supplied from a power supply 70 such as dry cell, a re-chargeable cell or the like to any of the components (audio reproduction section 10, wireless communication section 20, system controller 40 and body operation section 50), and the consumption of power is suppressed to the utmost.

If, while the audio reproduction apparatus 1 is in such a state of the "standby mode" as described above, a radio wave from the remote control apparatus 2 is received by the antenna 31 and a wake signal is outputted from the wake activation section 30 in accordance with the flow of the signal in the wake activation section 30 described above, then the system controller 40 having received the wake signal changes the mode setting to the "operation mode". After the system controller 40 is set to the "operation mode", it sets the components of the audio reproduction apparatus 1 to an operation state wherein the power is supplied to the components. Consequently, also the wireless communication section 20 is set to an operation state and starts communication with the remote control apparatus 2. Accordingly, the wake activation section 30 and the system controller 40 function as a wake control section 90 for transmitting a wake control signal to the wireless communication section 20 (refer to FIG. 3).

Further, when an instruction signal is inputted from the keys 61 of the remote control apparatus 2, or when an instruction signal from the body operation section 50 of the audio reproduction apparatus 1 is inputted, the audio reproduction section 10 starts reproduction of an audio signal from a disk 111 such as a CD or an MD. The reproduction audio signal data are transmitted to the remote control apparatus 2 through the wireless communication section 20, and sound is outputted from the headphone 66 of the remote control apparatus 2.

More particularly, the audio reproduction apparatus 1 changes the mode setting from the "standby mode" to the "operation mode" in the following order.
(1) On the remote control apparatus 2 which is set to the "standby mode" together with the audio reproduction apparatus 1 of the body, a reproduction staring (PLAY) button from among the keys 61 would be depressed by the user. Consequently, the remote controller control section 60 of the remote control apparatus 2 receives an input trigger signal of the key and changes the mode setting from the "standby mode" to the "operation mode".
(2) The remote controller control section 60 of the remote control apparatus 2 set to the "operation mode" sets (starts) the components (RFIC 62, audio processing section 63 and amplifier 64) of the remote control apparatus 2, which is in the standby state, to an operation state.
(3) The remote controller control section 60 of the remote control apparatus 2 reads contents of an instruction inputted through the keys 61 and transmits the instruction signal to the audio reproduction apparatus 1 from the RFIC 62 through the antenna 65.
(4) In the audio reproduction apparatus 1, since the wireless communication section 20 still remains set to the standby state, the instruction signal transmitted from the remote control apparatus 2 cannot be received by the wireless communication section 20. However, the antenna 23 connected to the wireless communication section 20 receives the radio wave (instruction signal).
(5) From the radio wave received by the antenna 23, a wake signal is generated by the wireless communication section 20 as described hereinabove.
(6) The mode setting of the system controller 40 of the audio reproduction apparatus 1 is set to the "operation mode" in response to the wake signal from the wireless communication section 20.
(7) The system controller 40 set to the "operation mode" sets the wireless communication section 20 to an operation state.
(8) The wireless communication section 20 of the audio reproduction apparatus 1 and the RFIC 62 of the remote control apparatus 2 are both set to an operative state in this manner thereby to form wireless communication.
(9) Consequently, an instruction signal from the remote control apparatus 2 is received by the audio reproduction apparatus 1, and audio signal data are transmitted from the audio reproduction apparatus 1 to the remote control apparatus 2.

In this manner, in the audio reproduction apparatus 1 of the present embodiment, when the audio reproduction apparatus 1 is in a state set to the "standby mode", the components thereof are set to a standby state and no power is supplied to the components. Then, when, in the state of the "standby mode", a radio wave from the remote control apparatus 2 is received by the antenna 31 and the wake activation section 30 outputs a wake signal, the system controller 40 having received the wake signal changes the mode setting to the "operation mode". Further, the system controller 40 set to the "operation mode" changes the setting to an operation state wherein power is supplied to the components. Consequently, power begins to be supplied to the components. Therefore, in the "standby mode" in which the components are inoperative, the consumption of power by the audio reproduction apparatus 1 can be suppressed to a very low level.

In the following, consumption of standby power in the audio reproduction apparatus 1 of the present embodiment is compared with that in a conventional audio reproduction apparatus.

In a conventional audio reproduction apparatus, prior to transmission of data from the transmitter (for example, a remote control apparatus), a leader pulse is transmitted, and the receiver (for example, an audio reproduction apparatus) is intermittently placed into an operative state for a short period of time with a low duty so that the receiver may be placed into an operative state during transmission of the leader pulse. Then, while the receiver is operative, it detects whether or not a leader pulse transmitted thereto is received. If it is detected that a leader pulse is transmitted from the transmitter, then the receiver is placed into an operative state for the predetermined period of time. In the audio reproduction apparatus having the configuration described above, if it is assumed that the time of the operation state of the receiver is placed intermittently after every 1 second with a duty of 30 ms, then since the power consumption of the receiver can be estimated to be approximately 58 mW in the operation state. Therefore, the standby power of 58 x 30/1000 = 1.78 mW is required.

In contrast, in the audio reproduction apparatus 1 of the present embodiment, when it is in the "standby mode", power is consumed only in the operational amplifier 33 of the wake activation section 30. For example, where a MOS single operational amplifier is used as the operational amplifier 33, power is consumed only by 60 *µ*A × 2.7 V = 162 µW. Where this is compared with that of the conventional audio reproduction apparatus, this can be reduced to standby power substantially equal to approximately 1/10. Consequently, the reproduction effect of the standby power is remarkable.

Incidentally, in the audio reproduction apparatus 1 of the present embodiment, the antenna 31 connected to the wake activation section 30 and the antenna 23 connected to the wireless communication section 20 are provided separately. However, in the audio reproduction apparatus 1 of the present embodiment, the antenna 31 and the antenna 23 may be formed commonly as a single antenna.

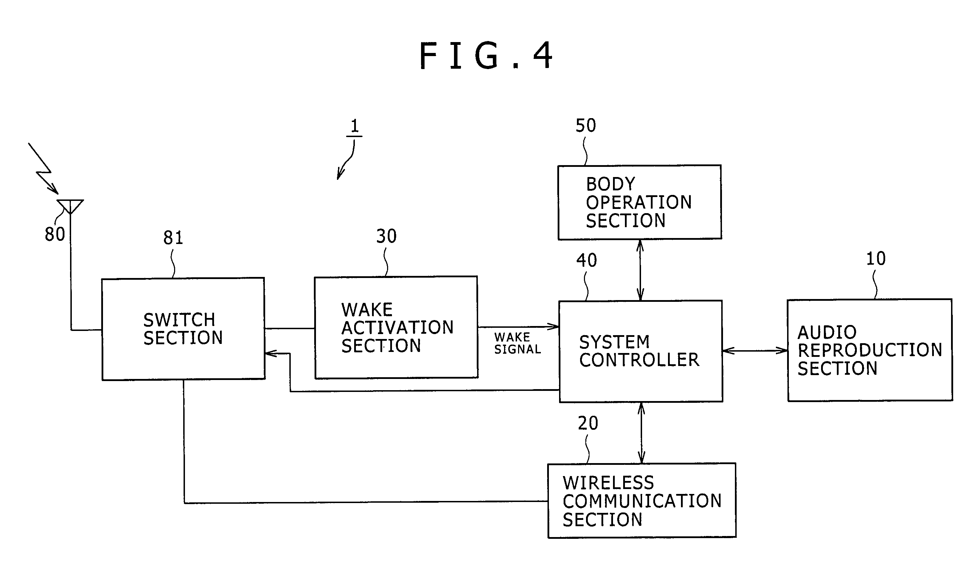

FIG. 4 shows a configuration of the audio reproduction apparatus 1 wherein a common antenna 80 which is a common configuration of the antenna 31 and the antenna 23 is disposed. Referring to FIG. 4, the common antenna 80 is selectively connected to the wireless communication section 20 and the wake activation section 30 by a switch section 81. Then, where the components are set to the "standby mode", the system controller 40 controls the switch section 81 so that the common antenna 80 is connected to the wake activation section 30. On the other hand, if the mode setting is changed from the "standby mode" to the "operation mode", then the system controller 40 controls the switch section 81 so that the common antenna 80 is connected to the wireless communication section 20 immediately.

Where the audio reproduction apparatus 1 is configured in this manner, when it is in the "standby mode", a radio wave received by the common antenna 80 is sent to the wake activation section 30 and used to generate a wake signal. On the other hand, if a wake signal is generated and inputted to the system controller 40 and consequently the system controller 40 is set to the "operation mode", then a radio wave received by the common antenna 80 is sent to the wireless communication section 20. Consequently, wireless communication between the audio reproduction apparatus 1 and the remote control apparatus 2 can be formed.

It is to be noted that embodiments of the present invention can be applied not only to the audio reproduction apparatus 1 but also to an electric apparatus which can communicate by wireless communication with a remote control apparatus such as an audio recording and/or reproduction apparatus which can perform also recording of sound or a video recording and/or reproduction apparatus which records and reproduces a video image.

As described above, in the audio reproduction apparatus 1 of the present embodiment, when a radio wave from the remote control apparatus 2 is received by the antenna 31 and the wake activation section 30 outputs a wake signal, the system controller 40 receives the wake signal and changes the mode setting from the "standby mode" to the "operation mode". Then, in a state wherein the audio reproduction apparatus 1 is set to the "standby mode", the components are set to a standby state and no power is supplied to the components. Consequently, after the system controller 40 is set from the "standby mode" to the "operation mode", the power begins to be supplied to the components. Therefore, in the "standby mode" in which the operation stops, the power consumption in the audio reproduction apparatus 1 can be set very low.

Therefore, also where a dry cell, a re-chargeable cell or the like is used as the power supply 70, the power can be utilized efficiently for actual action. Consequently, wasteful consumption of power can be suppressed and the life of a dry cell or a re-chargeable cell can be maintained for a long period of time.

Embodiments of the present invention can be applied to various electric apparatus which receive a control signal from a remote control apparatus and can be applied particularly to a data recording and/or reproduction apparatus such as, for example, a portable audio reproduction apparatus, a television receiver and an air conditioner.

While a preferred embodiment of the present invention has been described using specific terms, such description is for illustrative purpose only, and it is to be understood that changes and variations may be made without departing from the scope of the following claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An electronic apparatus for communicating with a remote control apparatus by radio communication, comprising:
an apparatus body;
a communication section for communicating, when said communication section is in an operation state, with said remote control apparatus to render said apparatus body operative; and
an activation control section for receiving, when said communication section is in a standby state, an operation signal from said remote control apparatus and changing over the state of said communication section from the standby state to the operation state.

2. The electronic apparatus according to claim 1, wherein said activation control section includes an activation signal generation section for receiving an operation signal from said remote control apparatus to produce an activation signal, and an activation control section for receiving the activation signal from said activation signal generation section and outputting an activation control signal for changing the state of said communication section from the standby state to the operation state.

3. The electronic apparatus according to claim 1, wherein said communication section transmits a data signal to said remote control apparatus.

4. A data recording and/or reproduction apparatus which is controlled through radio communication from a remote control apparatus, comprising:
a data recording and/or reproduction section for recording and/or reproducing data on and/or from a recording medium;
a communication section for communicating with said remote control apparatus;
a control section for controlling said data recording and/or reproduction section and said communication section when said control section is in an operation state; and
an activation signal generation section for receiving, when said activation signal generation section is in an operation state, an operation signal from said remote control apparatus and generating an activation signal for changing the state of said control section from the standby state to the operation state.

5. The data recording and/or reproduction apparatus according to claim 4, wherein said activation signal generation section includes an antenna for receiving a signal from said remote control apparatus, an amplifier for amplifying the signal received by said antenna, and a transistor for producing a trigger signal based on the signal amplified by said amplifier.

6. The data recording and/or reproduction apparatus according to claim 4, wherein said control section sets said data recording and/or reproduction section and said communication section to the operation state in response to reception of the activation signal from said activation signal generation section.

7. The data recording and/or reproduction apparatus according to claim 4, wherein said communication section is enabled for communication with said remote control apparatus in response to reception of the activation signal from said activation signal generation section.

8. The data recording and/or reproduction apparatus according to claim 4, wherein said remote control apparatus includes a sounding outputting section.

9. A starting controlling method for an electronic apparatus which communicates with a remote control apparatus by radio communication, said electronic apparatus including an apparatus body and a communication section for communicating, when said communication section is in an operation state, with said remote control apparatus to render said apparatus body operative, said starting controlling method for said electronic apparatus comprising a step of changing the state of said communication section from the standby state to the operation state in response to reception of an operation signal from said remote control apparatus when said communication section is in a standby state.
